Europäisches Patentamt

European Patent Office

Office européen des brevets

(19)

(11) **EP 0 700 188 A2**

(12) **EUROPEAN PATENT APPLICATION**

(43) Date of publication:
06.03.1996 Bulletin 1996/10

(51) Int Cl.⁶: **H04L 12/56, H04Q 11/04**

(21) Application number: 95305914.4

(22) Date of filing: 23.08.1995

(84) Designated Contracting States:
**DE ES FR GB IT NL SE**

(30) Priority: **31.08.1994 US 299472**

(71) Applicant: **AT&T Corp.**
**New York, NY 10013-2412 (US)**

(72) Inventor: **Wong, Albert Kai-sun**
**Edison, New Jersey 08820 (US)**

(74) Representative:
**Johnston, Kenneth Graham et al**
**AT&T (UK) Ltd.**
**5 Mornington Road**
**Woodford Green Essex, IG8 OTU (GB)**

(54) **Dynamic ATM network access control using an availability parameter at each port in the path**

(57)    A facility is provided in an ATM network to control the level of data traffic that a source of data supplies to the network for transmission over an associated connection. Such control is achieved by associating a scout cell with an availability parameter (Ac) and also associating each output port serving a segment of a connection with an availability parameter (Ap) indicative of the level of congestion at the port. Responsive to receipt of a scout cell, an output port overwrites the availability parameter (Ac) contained in the scout cell with its availability parameter (Ap) only if the latter value is less than the former value. The output port then forwards the scout cell to its intended destination. The destination port performs the same function, and then returns the scout cell to its originator via the reverse direction of the connection. Accordingly, the value of the availability parameter Ac contained in a returned scout cell thus indicates whether or not congestion exists at a point along the forward direction of a connection. That is, the value of Ac will be a minimum of all of the port availability parameters (Ap1, Ap2, .... Apn) values that the cell encountered as it traversed the associated connection. The level of such control is then determined as a function of the value of the availability parameter contained in the received scout cell.

FIG. 2

## Description

### Technical Field

The invention relates to a traffic admission control technique that may be used in an Asynchronous Transfer Mode (ATM) network.

### Background of the Invention

The minimum level of bandwidth that a user needs to transmit data over an ATM network is typically negotiated with an ATM network administrator before the user transmits the data over the network. As a result of such negotiations, the level of bandwidth (access) that is awarded to the user is typically defined by a number of different traffic parameters, such as peak and average transmission rates. The network thereafter provides at least the level of access defined by the agreed-to parameters. In doing so, the network "polices" the level of bandwidth that the user accesses during the transmission of data to ensure that the user's transmission of data conforms with the agreed-to parameters.

What this means is that the network admits only that level of traffic which conforms with the traffic parameters expected by the network. If the user transmits data at a level which does not conform with the expected parameters agreed to by the user, then the network may not admit the excess data into the network.

One such policing technique recognizes that once the above-mentioned traffic parameters are set then they should be allowed to adapt to the level of congestion occurring along the route of the connection carrying the user's data traffic. The technique detects congestion along a route of a particular connection by launching a scout cell containing a particular identifier over the connection. If the cell is returned to the originator after having traversed the route--thereby indicating that the route is not congested--then the originator allows the levels of such parameters to increase so that the level of data that is being admitted for transmission over the connection may increase accordingly. However, if a connection is experiencing congestion at a particular port circuit, then the port discards any scout cell that it may receive via the forward direction of the connection. Accordingly, if the cell is not returned to the originator as a result of being discarded--thereby indicating that the route is congested--then the originator adapts the parameters so that the level of such admission decreases.

I have recognized that such a technique favors network connections traversing a small number of nodes, for example, two nodes--which means that the admission rate for such connections will adapt to a level greater than the level adapted for connections involving a greater number of nodes, e.g., three or four nodes. Accordingly, there is a need for an admission control technique that does not favor one connection over another connection.

### Summary of the Invention

The invention according to claim 1.

Other aspects of the invention will be appreciated from the ensuing detailed description.

### Brief Description of the Drawing

In the drawing:

FIG. 1 is a broad block diagram of an ATM network in which the principles of the invention may be practiced;

FIG. 2 is a broad block diagram of a port circuit of FIG. 1;

FIG. 3 is an illustrative example of a so-called "scout cell" that is transmitted by the port circuit of FIG. 2 to determine if congestion exists along the route of a connection;

FIG. 4 illustrates the way in which the admission rate of data changes as a function of such congestion; and

FIGs. 5 and 6 illustrate graphically the principles of the invention as it is applied at an originating port and another port in an associated connection, respectively.

### Detailed Description

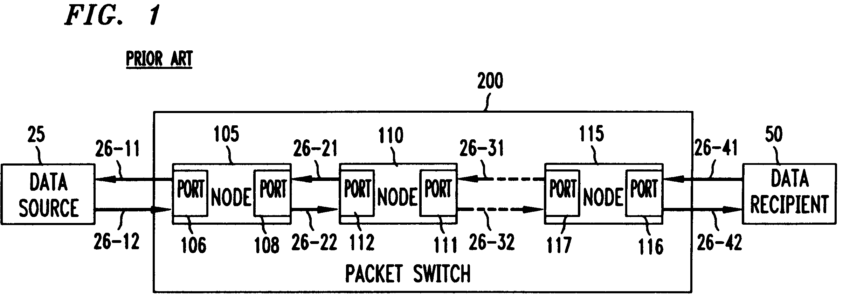

Turning now to FIG. 1, Asynchronous Transfer Mode (ATM) network 200 comprises a plurality of ATM switches, or nodes, three of which are shown in the FIG., namely nodes 105, 110 and 115. Each such node, e.g., nodes 105 and 115, serves a plurality of users, e.g., data source 25 and recipient 50, respectively. In practice, a data source (or recipient) may be a particular type of equipment, i.e., a computer or another network, and may transmit different types of data, such as video, computer data, etc, which is forwarded to an intended recipient via a respective network 200 connection. In an illustrative embodiment of the invention, such a connection may be a conventional virtual connection established between a source and recipient when it is needed and may also be a bidirectional connection, as shown in the FIG. for connection 26.

Specifically, when virtual connection 26 is first established between source 25 and recipient 50 via network 200, the level of traffic that source 25 may transmit over the connection is controlled by a set of priorly negotiated traffic parameters that are stored in port 106 of node 105. Port 106 uses such parameters to "police" the admission of data traffic that it receives from source 25. Such policing includes, (a) determining, in accord with an aspect of the invention, the level of congestion along connection 26 by launching a scout cell containing an availability parameter over the connection, (b) adapting the values of at least one of the aforementioned parameters as a function of the level of such congestion so determined and (c) sending information characterizing such congestion to the source, as will be discussed below.

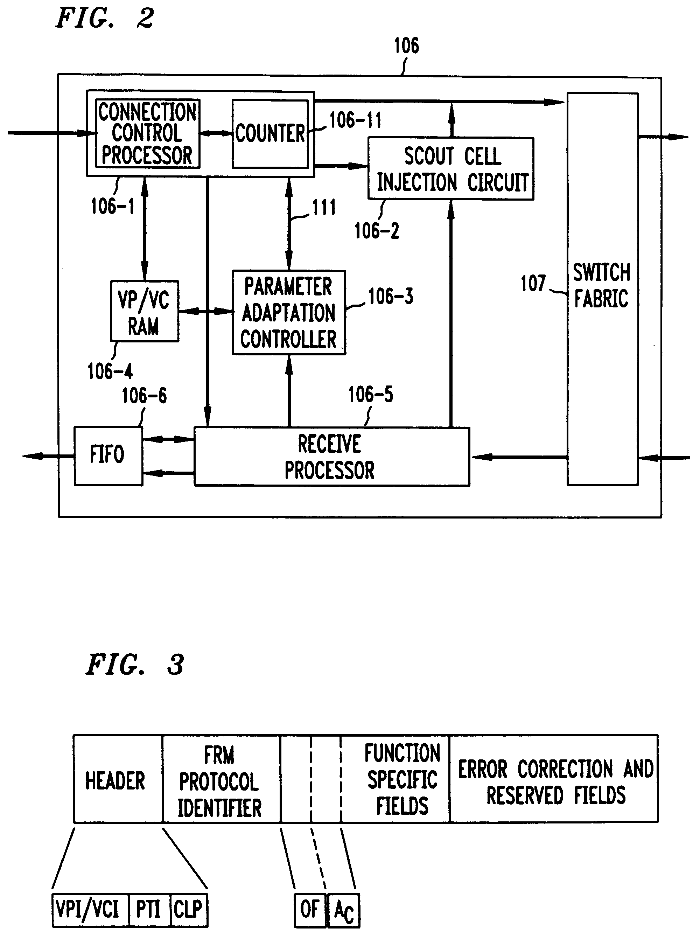

Turning now to FIG. 2, there is shown a broad block diagram of port 106. Port 106 includes connection control processor 106-1, scout cell injection circuit 106-2, and parameter adaptation controller 106-3. Connection control processor 106-1, more particularly, implements a number of different functions including (a) translating connection information contained in the header of a received cell to identify the intended destination of the cell, (b) determining (policing), for each virtual connection associated with source 25, whether data cells are being received at a rate which conforms with the traffic parameters negotiated for the particular virtual connection and (c) performing a number of measurements relating to a particular virtual connection, which measurements are not pertinent to the instant invention and, therefore, will not be discussed herein.

Processor 106-1 uses information contained in a Virtual Path/Virtual Channel (VP/VC) table that is stored in RAM 106-4 to perform such translation and policing. The VP/VC table contains a record for each of the aforementioned virtual connections, in which a record includes, inter alia, translation information relating the associated virtual connection with an output port, e.g., port 108 (FIG. 1). A record also includes the traffic parameters negotiated for the associated virtual connection, and the current value of the associated availability parameter Ac. As mentioned above, such traffic parameters define the negotiated peak and/or average rates for the admission of data cells received over the associated virtual connection, in which the peak rate and/or average rate may change dynamically, in accord with an aspect of the invention, based on the detection of the level of congestion along the route of the connection, as will be discussed below.

Processor 106-1 performs such policing using a conventional "leaky bucket" algorithm, such as the algorithm disclosed in the standard document CCITT I.371, Geneva, July, 1993, which is hereby incorporated by reference. Briefly, the parameters that are used in the leaky bucket standard to police the rate of admission of cells received via an associated virtual connection are stored in a VP/VC record. The parameters are a cell rate R and tolerance ($\tau$), in which the latter parameter is commonly referred to as a cell delay variation tolerance. The current value of R may be the negotiated rate, or minimum rate, or some other higher rate that obtains as a result of dynamically changing R as a function of the level of congestion along the route of the associated virtual connection. The leaky bucket algorithm reads those parameters out of the VP/VC table upon receipt of a cell that is to be transmitted over the associated virtual connection and then uses the parameters in accord with the aforementioned "leaky bucket" algorithm to determine if the data rate at which the cell is received complies with the parameters obtained from the associated record. If not, then processor 106-1 may discard the received cell. Otherwise, processor 106-1 forwards the cell to its intended destination via switch fabric 107.

The level of such congestion is determined by transmitting periodically a so-called "scout cell" over the particular virtual connection that is being accessed by source 25. The period, or interval, between the transmission of scout cells over a respective virtual connection is provisionable for the particular virtual connection, as will be discussed below in conjunction with counter 106-11. (It is noted that controller 106-1 generates a respective scout cell for each virtual connection that is active, i.e., data cells are being transmitted over the connection. It is also noted that a discussion of the generation and transmission of a scout cell over one virtual connection, e.g., connection 26, equally pertains to other active virtual connections processed by controller 106-1.)

Turning next to FIG. 3, a scout cell comprises a standard number of ATM size octets, namely 53 octets, in which the octets are partitioned to comply with a proposed standard for a so-called Fast Resource Management (FRM) cell. An FRM cell, more particularly, is characterized by a header, FRM protocol identifier, function specific fields and error check fields. The header includes Virtual Path (VP) and Virtual Circuit (VC) identifiers, which identify the associated virtual connection; Payload Type Indicator (PTI), which equals a value of six to identify an FRM cell; and Cell Loss Priority (CLP), which, when equal to a value of one, is accorded low cell loss priority. The values of the FRM protocol identifier and CLP fields for a scout cell are 04 (four) and 1 (one), respectively. The first octet of the function specific fields has a value of hexidecimal 0F (F0) when the cell is traveling in the forward (reverse) direction of the associated virtual connection. Thus, when controller 106-1 supplies a scout cell to switch fabric 107 for transmission over link 26-2 of virtual connection 26 extending in the forward direction to node 110 (FIG. 1), the contents of the first octet of the function specific field equals 0F. The function specific fields also include, in accord with an aspect of the invention, the value of the availability parameter Ac, which controller 106-1 sets to a predetermined value of all ones. That is, each time controller 106-1 transmits a scout cell it sets the contents of the Ac field to a predetermined value, representing, for example, a maximum value for Ac.

Returning to FIG. 1, node 110, responsive to receipt of a scout cell via link 26-22 and port 112 forwards the cell to output port 111 via the node 110 internal switching fabric (not shown). Output port 111, responsive to receipt of the scout cell, substitutes the current value of its own availability parameter for the value of the availability parameter contained in the scout cell if the former value is less than the latter value. As mentioned above, the value of the port 111 availability parameter is a measure of the current level of congestion at output port 111. That is, if congestion currently exits at port 111, i.e., the number of data cells queued at that port is above a predetermined threshold, then the value of the port 111 availability parameter (Ap) decreases to reflect that condition. Otherwise, it does not if the opposite condition is true. In any case, port 111 forwards the scout cell toward its intended destination via link (path) 26-32 (i.e., the forward direction). (It is noted that link 26-32 is shown as a dashed line to indicate the possibility that one or more intervening ATM switches, or nodes, may be disposed between output port 111 and input port 117.) Port 117, responsive to receipt of the scout cell, forwards the cell to destination, or output port 116 via the internal switching fabric (not shown) of node 115, based on the VPI/VCI information contained in the header of the received cell. Similarly, output port 116, responsive to receipt of the scout cell, substitutes the current value of its own availability parameter for the value of the availability parameter contained in the scout cell if the former value is less than the latter value. Port 116 then changes the first byte of the function specific field from 0F to F0 to indicate that the transmission direction of the scout cell is being routed in a reverse direction of the associated connection. Port 116 then injects the scout cell into the traffic that is being transported over virtual connection 26, but in the opposite direction, i.e., over path 26-31.

The changing of the aforementioned first byte from 0F to F0 changes the way a node, e.g., node 110, processes the scout cell. That is, upon receipt of the changed scout cell, node 110 processes the cell in the same manner as it does user traffic, since the purpose of the cell is to determine the level of congestion in virtual connection 26 from node 105 to node 115 and not from node 115 to node 105. Accordingly, when node 110 receives the scout cell via port 111 and passes the cell to port 112, then port 112 will find that the first field of the function specific fields of the received cell contains a FO, thereby indicating that the cell is traveling in the reverse (opposite) direction of the associated connection. In that case then, port 112 forwards the scout cell toward its intended destination via path 26-21 based on the contents of the associated VP/VI fields. Port 112 does so without comparing the value of the availability parameter contained in the cell with the value of its own availability parameter.

(The level of congestion in the virtual connection 26 from node 115 to node 105 is determined by port 116. That is, port 116 similarly injects its own scout cells into the virtual connection 26 from port 116 to port 106 with each of those cells carrying an availability parameter value derived by port 116. Ports 112 and 106 process those cells similar to the way that ports 111 and 116 respectively process scout cells originated by port 106.)

Assuming that processor 106-5, FIG. 2, receives via switch fabric 107 the scout cell originated by port 106, then, responsive thereto, processor 106-5 stores the cell in an associated register (not shown) and then checks the VPI/VCI field thereof to determine if the cell originated at port 106. If it did, then processor 106-5 notifies parameter adaptation controller 106-3 of that fact. Adaptation controller 106-3, in turn, determines, as a function of the value of the availability parameter A contained in the received scout cell and negotiated rate R0, a new admission rate, Rn, that should be applied to the data cells received from source 25. The new admission may increase, decrease or remain the same. That is, the bandwidth, Rp, that the source may use ("allowed bandwidth") will be adapted toward the value of $(R0 + (A{*}r))$ in accord with a particular decrement/increment algorithm. The value of parameter r is associated with a particular connection that the user (data source) uses and is negotiated and agreed to by the user. The parameter is thereafter used to determine the level of bandwidth in excess of the negotiated rate R0 that will be made available to the connection when bandwidth in the network involving the connection is available. For example, if the parameter r for connection x is twice that of connection y, and the current value of the availability parameter is the same for both connections, then the amount of excess bandwidth that will be offered to connection x will be twice the amount that is offered to connection y.

The decrement/increment algorithm that adaptation controller 106-3 employs decrements the value of the admission rate Rn if Rp is found to be larger then $(R0 + (A{*}r))$ (where Rp is the previous value and Rn is the new updated value of the allowed bandwidth). In doing so, the algorithm immediately sets Rn to equal $(R0 + (A{*}r))$ so that all sources of traffic (data) affected by that value of A responds immediately thereto. In this way, if a port in the network is experiencing congestion, then those sources whose data travels through that port will respond immediately to the congestion and "modulate" their transmission rate accordingly. However, in the opposite case a source is not allowed to immediately increase the amount of bandwidth it is using to $(R0 + (A{*}r))$, but is restricted to a lesser increase that is based on the number of data cells that were received from the source over a previous interval. Thus, for the case where Rp is less than $(R0 + (A{*}r))$, then;

$$Rn = Rp - ((Rp - R0){*}D) + G{*}N \qquad (1)$$

where equation (1) specifies a first-order linear filter of N having an equilibrium rate Re of;

$$Re = R0 + E\{N\}{*}(G/D) \qquad (2)$$

Where $E\{N\}$ is the average value of n and G/D represents the dc gain of the filter. At equilibrium, then, the allowed admission rate may be limited by either $(R0 + (A{*}r))$ or $(E\{N\}{*}(G/D))$ if the latter value is small, which occurs when the source is not transmitting a large amount of data. In either case, the allowed admission rate Rn will not exceed k times the average transmission rate at the source. For appropriate values of D and G, k may take on values of, for example, 1.2 to 2.0, so that the allowed transmission rate Rn does not exceed the actual usage rate of the associated connection by 1.2 to 2.0 times.

The following is an example of the problem that may occur when the above precaution is disregarded. In particular, assume that a plurality of connections associated with identical parameters R0, r, etc., pass through a particular port circuit associated with a port availability parameter of Ap and that data is being transmitted over only one of the connections at a rate (R0 + (Ap*r)). In that instance, and as the associated network attempts to accept as much data traffic as it can process, then the value of Ap will be adjusted such that the value of (R0 + (Ap*r)) will be close to the bandwidth of the port circuit. Accordingly, the one active connection will be allowed to use close to the full bandwidth of the port circuit. Note that if the above-mentioned precaution were not employed and if another connection also passing through the same port became active, then that connection will use the same level of the bandwidth as the first active connection, thereby quickly overloading the port and the output segment of the connection connected to that port.

The amount of bandwidth that is used to launch scout cells over a particular connection may be held to a small percentage of the number of user data cells that are launched over the same connection during a predetermined control interval of time. The connection control processor may do this by associating a counter (e.g., counter 106-11, FIG. 2) with each such connection as a way of counting the number of data cells that are received from the associated source. At the end of a control interval, if the contents, C, of the counter indicates that the number of data cells received from the source during the interval meets or exceeds a particular paramenter t1, then the counter is cleared and a scout cell is launched over the associated connection. Otherwise, a scout cell is not launched and control processor 106-1 continues to increment the counter for each data cell received during a next interval. Accordingly, a scout cell is launched over the associated connection only after at least c1 data cells have been received and launched over the associated connection over one or more adjacent control intervals. For example, if c1 equals 32, then no more than one data cell will be generated and launched over the associated connection for every 32 user data cells that are received and launched over the same connection.

As such, if the connection is operating at a large bandwidth, then it is likely that a scout cell will be launched over the connection at the end each control cycle. As a result, the level of data that is transmitted over the connection may be controlled very quickly. If, on the other hand, a connection is operating at a small bandwidth, then a scout cell will be launched less frequently. As a result, a port's response to changes in the associated network connection will not be quick, which is acceptable since operating bandwidth of the connection is relatively small.

As mentioned above, a port circuit generates dynamically an availability parameter for each outgoing (egress) data link that it serves. For example, ports 108 and 111 (FIG. 1) each generate an availability parameter indicative of the level of congestion at the port which affects their respective outgoing segments of path 26.

Specifically, a port circuit (connection control processor 106-1, FIG. 2) determines the value of its availability parameter for a respective interval by first determining the number of data cells that arrived over a predetermined interval, as discussed above. The port then determines the utilization of the output link that it serves as follows:

$$p(\rho) = nsubarr/(Re * Tu)$$

where the value of p(p) is indicative of the utilization of the egress port, the value of p is 1 if the number received (arriving) cells equals number of cells that the port can output to its associated segment of the connection during an update interval Tu; nsubarr is the number cells that arrived at the port during the current update interval Tu and Re is the transmission rate of the associated egress (output) segment, or link.

Processor 106-1 then determines the number of cells "q" that are currently stored in an output queue (e.g., a FIFO) associated with the output link. That is, if (p) > Umax (where Umax <1 and is indicative of "target" level for the utilization of an associated port), processor 106-1 derives the current value of the availability parameter for its associated egress port as follows:

$$Anew = Aold * ((qmax - q)/qmax), Anew \geq 0$$

where Anew and Aold are, respectively, the new and old values of the port availability parameters, Ap; ((qmax - q)/qmax) is a dynamic damping factor which is based on how far the number of data cells currently stored in the queue is from exceeding the maximum number of data cells Qmax that may be stored in the queue, in which Qmax is provisioned for the associated port. However, if p < Umax, then processor 106-1 derives the current value of the availability parameter A for its associated egress port as follows:

$$Anew = Aold + G1$$

where G1 is a gain increment that may be provisionable on a per port basis.

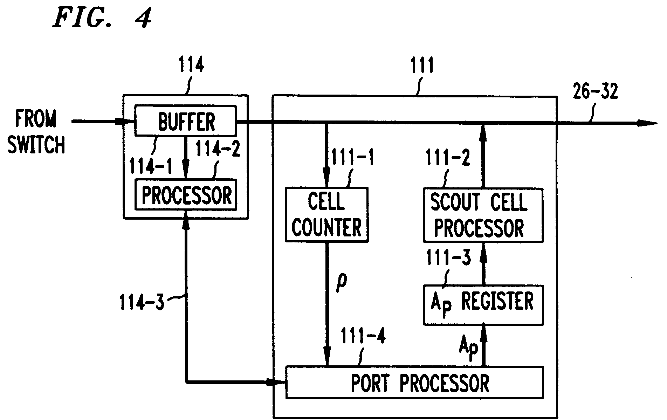

Turning now to FIG. 4, an output port, e.g., port 111, includes, inter alia, a scout cell processor which monitors the information cells that are unloaded from data buffer 114-1 and supplies to communications path 26-32. Processor 114-2 tracks the number of information cells that are received via the node 110 switching fabric (not shown) for storage in buffer 114-1 for presentation, on a first in, first out basis, to path 26-32. In this respect, this number is a measure of the level of congestion that is being experienced at port 111 and is sent via path 114-3 to port processor 111-4 each time it is calculated by processor 114-2. That is, processor 114-2 forms a message specifying the number of data cells stored in buffer 114-1 and then sends the message to processor 111-4 via path 114-3. Port 111 also includes cell counter 111-1 which counts the number of cells that buffer 114-1 supplies to path 26-32 within a given interval. Counter 111-1 then supplies that number, p(t) to port processor 111-4. Armed with the latter value and the value received from processor 114-2, port processor 111-4 calculates, in the manner discussed above, the current value of Ap and stores that value in register 111-3.

Scout cell processor 111-2 monitors the output of buffer 114-1 as a way of identifying which of the cells are scout cells. When a scout cell is outputted to path 26-32, processor 111-2 compares the value of the availability parameter, Ac, contained in the cell with the value, Ap, stored in register 111-3. If Ap is smaller than Ac, then processor 111-2, in accord with an aspect of the invention, changes, on the "fly", the value of Ac in the cell to the value of Ap contained in register 111-3, as discussed above. Processor 111-2, then allows the updated scout cell to proceed to path 26-32. Processor 111-2 also allows the cell to pass to path 26-32 when Ac is smaller than Ap, as discussed above.

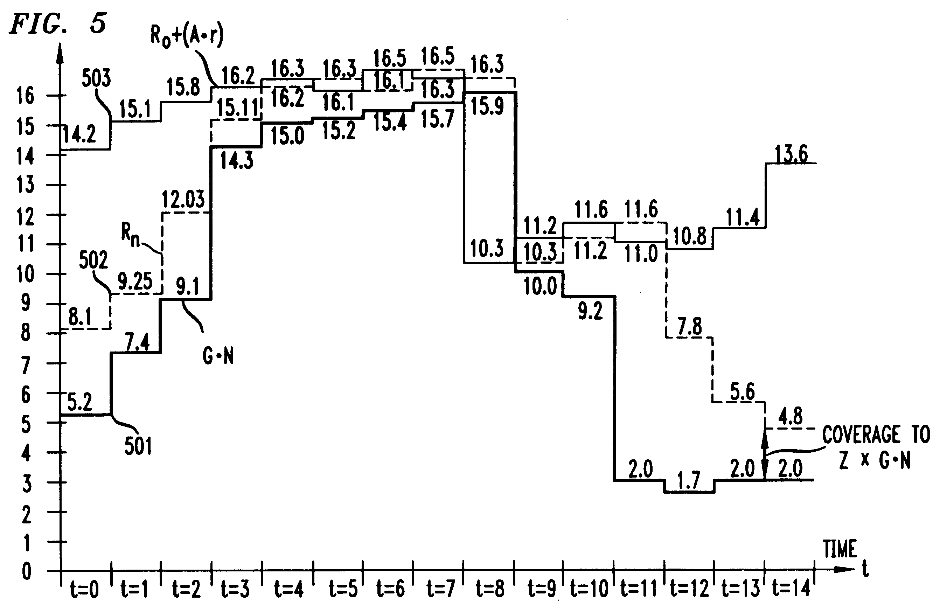

FIG. 5 illustrates graphically how the bandwidth for a source of data (allowed bandwidth) is updated based on the value of the availability parameter that is returned from the network and the actual level of bandwidth that the source is using. As mentioned above, the source uses a level of bandwidth that is below the value of the allowed bandwidth. In Fig 5, 503 illustrates the level of bandwidth that is allowed by the network, 502 illustrates the allowed bandwidth for a particular connection and 501 illustrates the level of bandwidth that is being used by the source relative to the allowed bandwidth. The values shown for 501, 502 and 503 for each interval of time is derived in accord with above-described equation.

For the present example, assume G has a value of 1 and D a value of 0.5. Also assume that the initial values for "curves" 501, 502 and 503 are 5.2, 8.1 and 14.2 units of cells per second (ucps), respectively. Further assume that the value of the allowed bandwidth for the network 503 is relatively high (14.2) and remains high through time interval t = 7. Note that the allowed bandwidth for the connection represented by 502 increases toward the bandwidth allowed by the network as a result of a corresponding increase in the level of bandwidth that the source is using through interval t = 7. Further assume that at interval t = 8, the bandwidth allowed by the network decreases sharply to 10.3 units of cells per second (ucps). Because of the decrease, then at interval t = 9 the bandwidth allowed for the connection similarly decreases to 10.3 ucps. Assume that thereafter the level of bandwidth allowed by the network steadily increases from 11.2 to 13.6 ucps during intervals t=9 through t=14. It is assumed, however, that for the same period of time the source becomes less active and, therefore, decreases its use of the network bandwidth from 10.0 to 2.0 ucps. Accordingly, the allowed bandwidth for the connection follows a corresponding decrease from 10.3 to 4.8 ucps. When the source reaches that point, it cannot then suddenly increase its use of the bandwidth but must keep such use to a value that is below the allowed bandwidth for the connection. However, as the source becomes more active, it will increase its use of the bandwidth, which, in turn, causes the allowed bandwidth 502 for the connection to gradually increase, which allows the source to take further advantage of the bandwidth that is allowed by the network (503), and so on.

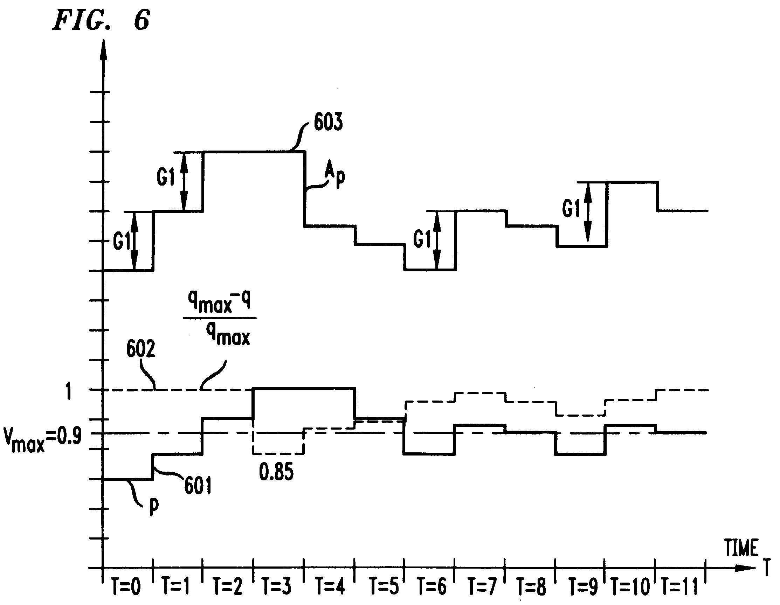

FIG. 6 illustrates graphically how a port circuit, e.g., port 111, updates its associated availability parameter, Ap. In the FIG., 603 represents Ap, 602 represents the dynamic damping factor, (qmax-q)/qmax, and 601 represents the utilization of the port, p. Assume for the FIG. that Umax equal 0.9 and that for intervals T = 0 and T = 1 p is below 0.9 and Ap is incremented by a gain factor of G1. Therefore, Ap increases steadily through interval T = 2, and p becomes greater than Umax and continues as such through interval T = 5. Assume that the dynamic damping factor decreases at the beginning of interval t = 3 to a value of, e.g., 0.85, as result of an increase in the number of data cells that are stored in the queue of the associated port . Consequently, the value of Ap at interval T = 4 becomes Ap*0.85. Accordingly, the value of Ap (603) decreases as shown in the FIG. The value of Ap continues to decrease through interval T = 5 as a result of an assumed increase in the level of data cells that are being received at the port. This increase causes the value of p (601) to remain above the value of Umax through interval T = 5, which, in turn, causes Ap to be decremented. As a result of the decrease in Ap and as a result of communicating the new Ap to the various sources using the associated port, the utilization of the port as represented by p (601) is adjusted to within a narrow range of Umax as shown for intervals T = 6 through T = 11. Accordingly, the foregoing effectively prevents Ap from changing significantly over a very short period of time.

The foregoing is merely illustrative of the principles of the invention. Those skilled in the art will be able to devise numerous arrangements, which, although not explicitly shown or described herein, nevertheless embody those principles that are within the spirit and scope of the invention.

**Claims**

1. A method of controlling a rate at which data cells are admitted into a data network for transmission over an associated connection to an intended destination, said data cells being supplied by a source of data cells and said network comprising a plurality of data nodes, ones of said data nodes being interconnected to one another by respective data links to form said connection to said destination, said method comprising the steps of

at one of said ones of said data nodes that is connected to said source, associating said source with an allowed transmission rate indicative of the rate that said one data node will accept data cells from said source,

associating each of said nodes including said destination with an availability parameter, Ap, indicative of the level at which data cells are being transmitted over respective ones of said links,

at said one data node, forming a scout cell containing an availability parameter, Ac, having a predetermined value and transmitting said scout cell over said connection,

responsive to receipt of said scout cell at individual ones of said ones of said data nodes including said destination, replacing the value of the availability parameter contained in the received scout cell with the value of the associated availability parameter, Ap, only if the latter value is less than the former value and transmitting the scout cell over the respective one of said links,

at said destination node, returning said scout cell to said one node via said connection, and

at said one node, responsive to receipt of said scout cell, adjusting said transmission rate as a function of the value of the availability parameter contained in the received scout cell.

2. A method of controlling a rate at which a data source supplies data cells to an associated node of a data network for transmission to an intended destination over a first connection through said network to said destination, said method at said associated node comprising the steps of

associating said source with an allowed transmission rate and accepting data cells from said source at said rate for transmission over said connection,

transmitting a scout cell containing an availability parameter, Ac, of a particular value over said connection, and

thereafter responsive to receipt of the scout cell from said destination via a second connection through said network, adjusting the level of the allowed transmission rate to a level derived as a function of the value of the availability parameter contained in the received scout cell if the latter value is different from the value of Ac.

3. The method of claim 2 further comprising the steps of periodically transmitting said scout cell over said connection.

4. The method of claim 3 wherein said periodicity is based on the number of data cells that said associated node receives from said source within a respective predetermined interval of time.

5. The method of claim 2 wherein said data network is formed from a plurality of nodes and wherein said first connection traverses individual ones of said nodes and terminates at a destination node and wherein said method further comprises the steps of

at each of said individual ones of said nodes including said destination node, associating an availability parameter, Ap, with that segment of said first connection served by the respective one of said ones of said nodes and said destination node, said availability parameter, Ap, having a current value indicative of the current level of congestion occurring at the respective segment of said first connection,

responsive to receipt of said scout cell at each of said ones of said nodes and said destination node, replacing the availability parameter, Ac, in the received scout cell with the value of the associated availability parameter, Ap, only if the latter value is less than the former value and transmitting the scout cell over the respective segment of said first connection,

at said destination node, returning said scout cell to said associated node via said second connection, and

at said one node, responsive to receipt of said scout cell, adjusting said rate as a function of the value of the availability parameter contained in said received scout cell.

6. The method set forth in claim 2 wherein said method further comprises the step of allowing said rate to increase until it reaches a maximum value based on the value of the availability parameter contained in succeeding ones of scout cells received at said associated node via said second connection.

7. The method set forth in claim 5 wherein said initial rate is based on predetermined traffic parameters associated with said source, said traffic parameters including at least a rate, R0, priorly negotiated with said source Rn and a cell delay tolerance variation.

8. A method for use in a data network formed from a plurality of nodes, ones of said nodes forming a connection between a source of data and an intended destination of said data, said method being contained in at least one of said ones of said nodes and comprising the steps of

receiving a scout cell containing an availability parameter, via said connection,

deriving a value for an availability parameter, Ap, indicative of a level of congestion occurring in an associated segment of said connection extending toward said destination, and

changing the value of the availability parameter contained in the received scout cell to the value of Ap if the latter value is less than the former value and then transmitting the scout cell over said segment.

*FIG. 1*

PRIOR ART

DATA SOURCE 25

DATA RECIPIENT 50

PACKET SWITCH 200

26-11  26-12  26-21  26-22  26-31  26-32  26-41  26-42

NODE 105 — PORT 106 — PORT 108
NODE 110 — PORT 112 — PORT 111
NODE 115 — PORT 117 — PORT 116

*FIG. 2*

*FIG. 3*

# FIG. 4

FIG. 5

EP 0 700 188 A2

# FIG. 6

EP 0 700 188 A2